# EUROPÄISCHE PATENTSCHRIFT

(11) **EP 0 479 765 B1**
(45) Veröffentlichungstag und Bekanntmachung des Hinweises auf die Patenterteilung: **24.04.1996**
(21) Anmeldenummer: 91890225.5
(22) Anmeldetag: 24.09.1991
(51) Int. Cl.: B29C 65/02, B29C 65/20

(54) **Verfahren zum Verbinden von thermoplastischen Kunststoffteilen**
Method of joining thermoplastic parts
Procédé pour l'assemblage d'éléments en matière thermoplastique

(30) Priorität: 01.10.1990 AT 1974/90
(43) Veröffentlichungstag der Anmeldung: 08.04.1992
(73) Patentinhaber: ELIN ENERGIEANWENDUNG GESELLSCHAFT M.B.H., A-1141 Wien (AT)
(72) Erfinder: Tomazic, Gerd, Dipl.-Ing. Dr., A-8680 Mürzzuschlag (AT)
(74) Vertreter: Krause, Peter

(56) Entgegenhaltungen:
- EP-A- 0 061 123
- CH-A- 338 021
- DE-A- 3 408 373
- US-A- 2 178 528
- US-A- 2 446 623
- US-A- 4 390 384
- US-A- 4 663 206

## Beschreibung

Die Erfindung betrifft ein Verfahren zum Verbinden von thermoplastischen Kunststoffteilen, wobei deren zu verbindende thermoplastische Stirnbereiche, insbesondere durch Kontakt mit einem Heizelement, z. B. metallisches Schwert, insbesondere gleichzeitig, bis zum Erweichen erhitzt werden, worauf die erweichten Kunststoffbereiche zum gegenseitigen Kontakt gebracht, insbesondere die Kunststoffteile zueinander geschoben werden, wodurch eine Schweißnaht zwischen den Kunststoffteilen gebildet wird, welche mechanisch mit Druck beaufschlagt wird.

Aus der EP-A 061 123 ist ein derartiges Verfahren bekannt. Bei diesem Verfahren erfolgt die Beaufschlagung durch Rollen.

Obwohl in der Kunststofftechnik in der Regel Bauteile, z. B. Gehäuse, Tröge für Flüssigkeiten, Diaphragmen für Batterien und dgl. möglichst einteilig ausgebildet werden, müssen Kunststoffteile entweder, um bestimmte räumliche Konfigurationen zu erreichen, großvolumige Konstruktionen bzw. großflächige Konstruktionen, um die entsprechenden Formkosten in wirtschaftlichen Grenzen zu halten oder auch um Kunststoffteile unterschiedlicher Zusammensetzung und damit Eigenschaften zu erhalten, miteinander verbunden werden. Bei thermoplastischen Kunststoffen können diese an den zu verbindenden Flächen durch Wärmeeinwirkung und anschließendem Druck miteinander verbunden werden. Bei duroplastischen Kunststoffen besteht entweder die Möglichkeit, diese Verbindung durch herkömmliche Elemente z. B. Schrauben, Mieten oder dgl. herzustellen oder die Verbindung durch Klebstoffe zu verwirklichen. Eine weitere Möglichkeit bei duroplastischen Kunststoffen besteht darin, daß die in der Regel vorhandenen, wenn auch nicht stark ausgebildeten thermoplastischen Eigenschaften der Duroplaste genutzt werden um eine thermoplastische Verbindung zu erreichen.

Bei der thermoplastischen Verbindung von thermoplastischen Kunststoffen kann auch ein thermoplastischer Schweißzusatzwerkstoff, der insbesondere artgleich wie die zu verbindenden Werkstoffe ist, Verwendung finden.

Wie bei metallischen Verbindungen bekannt, stellt in der Regel die Verbindungsnaht z. B. Schweißnaht zwischen den zu verbindenden Werkstoffen nicht die Schwachstelle dar, sondern es sind in der Regel die an die Schweißnaht angrenzenden Bereiche der zu verbindenden Teile die Schwachstellen, welche entweder für einen Bruch der Verbindung zwischen den Teilen Ursache sind oder auch gemeinsam mit der Schweißnaht unerwünschte geometrische Verzerrungen verursachen. Derartige geometrische Verzerrungen können insbesondere dann auftreten, wenn Kunststoffe mit unterschiedlichem Füllstoffgehalt z. B. Polypropylen ohne Füllstoffe und Polypropylen mit Glasfaser, Rußen od. dgl. oder mit anderen Kunststoffen z. B. Polyäthylen verbunden werden. Derartige Konstruktionen sind jedoch beispielsweise für, insbesondere bipolare, Elektroden wie sie für wiederaufladbare Zink-Brom-Batterien mit umlaufenden Elektrolyten erforderlich sind, von besonderem Vorteil. Hiebei wird der elektrochemisch wirksame innere Bereich der Elektrode, welcher elektrisch leitend ist und damit eine hohe Wärmeleitfähigkeit besitzt von einem elektrisch nichtleitenden Rahmen und damit mit einer geringeren Wärmeleitfähigkeit versehenen Polypropylenteil umgeben. Alleine aufgrund der unterschiedlichen Wärmeleitfähigkeiten der beiden miteinander zu verbindenden Kunststoffteile werden nach Beendigung des Verbindens, insbesondere des Verschweißens Spannungen in den zu verbindenden Teilen verursacht, wodurch eine vorzeitige Zerstörung der Verbindung und zwar neben der Schweißnaht und auch geometrische Verwerfungen z. B. unerwünschte Wellenbildungen von planseienden Flächen bedingt sind.

Ein weiteres bekanntes Verfahren ist in der AT-PS 185.570 beschrieben. Bei diesem bekannten Verfahren wird ein Schweißorgan entlang der zu verbindenden Teile geführt. Dieses Schweißorgan weist einen schwertähnlichen Fortsatz auf, der seinerseits für die Erweichung der miteinander zu verbindenden Stirnteile der Kunststoffteile Sorge trägt. Die, durch Ineinanderfließen der erweichten Bereiche erhaltene, Schweißnaht wird durch ein mit dem Schwert einstückig ausgebildeten Teil, der dem Schwert nacheilt, geglättet, wobei die Schweißnaht ihrerseits zum Glätten angeschmolzen wird.

Die vorliegende Erfindung hat sich zur Aufgabe gestellt, ein Verfahren zur Verbindung von Kunststoffteilen mit thermoplastischen Bereichen entlang ihrer Stirnflächen zu schaffen, das eine hohe Festigkeit der zu verbindenden Teile verwirklicht und das eine besonders geringe Deformation der zu verbindenden Teile verursacht.

Das eingangs zitierte Verfahren ist erfindungsgemäß dadurch gekennzeichnet, daß die noch erweichte und vorzugsweise abkühlende Schweißnaht und gegebenenfalls die anschließenden Ränder der Kunststoffteile, mit einem auf Raumtemperatur gehaltenen Schlagelement impulsartig, insbesondere durch zumindest einen Impuls, beaufschlagt wird. Durch diese Verfahrensweise werden die ineinander fließenden Stirnbereiche der zu verbindenden Kunststoffteile bzw. die ineinander geschobenen Kunststoffbereiche druck- bzw. spannungsausgleichend miteinander verbunden. Störstellen, welche durch die Schweißnaht bedingt sind, werden gegenüber den zu verbindenden Kunststoffteilen besonders wirksam vermieden. Gleichzeitig werden spitzenartige Krafteinleitungen von einem Kunststoffteil zum anderen Kunststoffteil, wodurch es beispielsweise zu Verwerfungen oder dgl. kommt, besonders günstig vermieden.

Durch das auf Raumtemperatur gehaltene Schlagelement wird erreicht, daß nicht nur eine an der Oberfläche liegende Ausgleichung der Kräfte, sondern ein bis in das Innere der Schweißnaht gehender Ausgleich der Kräfte vorliegen kann. Weiters erfolgt die Druckegalisierung besonders vorteilhaft, da die Kunststoffteile, die miteinander zu verbinden sind, in der Regel ebenfalls bei Raumtemperatur sind, sodaß die Oberfläche der Schweißnaht und die zu verwendenden Kunststoffteile bereits bei Raumtemperatur nur geringe Kraftspitzen aufweisen.

Erfolgt die Impulsbeaufschlagung, bezogen auf die Schweißnaht, schrittweise, und wird die jeweils frisch gebildete Schweißnaht beaufschlagt, so unterliegt die Schweißnaht besonders geringer thermischer Beanspruchung, wobei gleichzeitig eine besonders verfahrensökonomische Egalisierung der Kräftespitzen im Bereich der Schweißnaht erreicht werden kann.

Wird die Schweißnaht der zu verbindenden Teile mit Bereichen unterschiedlicher Wärmeleitfähigkeit durch Aufschmelzen von Kunststoffteilen mit unterschiedlicher Wärmeleitfähigkeit, z. B. Kunststoffe mit unterschiedlichem Füllstoffgehalt bzw. Füllstoffen gebildet, so kann ohne Schweißzusatzwerkstoffe eine Schweißnaht mit unterschiedlich zusammengesetzten Kunststoffen ja sogar unterschiedlichen Kunststoffen erhalten werden, die keine zusätzlichen Spannungsausgleiche zwischen den einzelnen Kunststoffteilen benötigt, sodaß eine Schweißnaht mit besonders hoher Festigkeit und auch gleichmäßiger Krafteinleitung in den Kunststoffteilen zueinander erreicht werden kann.

Übergreift an aneinander, insbesondere unter einem Winkel größer 0°, z. B. 90°, anschließenden Schweißnähtem die impulsartige Beaufschlagung eine Schweißnaht, so kann dadurch ein Ausgleich der, insbesondere in Ecken von Schweißverbindungen, vorhandenem Krafteinleitungsspitzen, besonders wirksam erreicht werden.

Wird die Schweißnaht von beiden Seiten, insbesondere gleichzeitig impulsartig beaufschlagt, so wird nicht nur die Reflexion der Kräfte, wenn eine einseitige Beaufschlagung erfolgt und eine starre Unterlage gegeben ist, erreicht, sondern es wird von beiden Seiten eine tiefer greifende Ausgleichung der Druckspitzen auf besonders einfache Art und Weise durchgeführt.

Wird die Schweißnaht in etwa der Materialstärke der zu verbindenden Kunststoffteile im Bereich der Verbindung gehalten, so kann auch bei späterer Krafteinwirkung, beispielsweise durch Wärmebeaufschlagung bedingt, eine besonders gleichmäßige Überleitung der Kräfte von einem Kunststoffteil in den anderen Kunststoffteil ohne Kraftspitzen durch die Schweißnaht zu verursachen, erreicht werden.

Im folgenden wird die Erfindung an Hand der Beispiele näher erläutert:
Beispiel 1: Zwei Polypropylen-Platten gleicher Zusammensetzung mit einer Materialstärke von 1,2 mm wurden durch ein metallisches Schwert, das auf 230° Celsius erhitzt war, an eine ihrer Stirnseiten, die eine Länge von 20 cm aufwies, erwärmt. Die Stirnseiten wurden dabei aufgeschmolzen, wonach das Schwert wieder außer Kontakt mit den Stirnseiten gebracht wurde. Darauf wurden die beiden Stirnseiten gegeneinander gefahren und in Kontakt zueinander gebracht, wobei eine leicht erhabene Schweißnaht gebildet wurde. Diese Schweißnaht war auf der unteren Seite durch eine Tragplatte abgestützt und gegen die Schweißnaht und auch gegen die angrenzenden Bereiche der beiden Polypropylen-Platten wurde ein Schlagelement mit einer Geschwindigkeit von 3 m/Sek. gefahren. Die Bewegung des Schlagelementes war so eingestellt, daß dieses 1,1 mm gegen die Polypropylen-Platten drücken konnte. Aus den so verbundenen Platten wurde eine Probe mit Abmessungen 100 mm x 20 mm entnommen, wobei die Schweißnaht normal zur Längserstreckung angeordnet war und einem Zugversuch unterworfen. Die Festigkeit ergab hiebei > 95 % des Material-Basiswertes.

Aus analogen Material mit entsprechenden Schweißbedingungen jedoch ohne zusätzlicher impulsartiger Beaufschlagung der Schweißnaht betrug die Festigkeit 65 %.

Obigem Versuch ist somit eindeutig zu entnehmen, daß eine impulsartige Beaufschlagung der noch erweichten Schweißnaht eine wesentliche Verfestigung der Schweißnaht erbringt.

Beispiel 2: Es wurde eine Verbindung von Polypropylen-Platten gemäß Beispiel 1 durchgeführt, wobei eine impulsartige Beaufschlagung der noch erweichten Schweißnaht gemäß Beispiel 1 jedoch in einer Frequenz von 5 Hertz, 10 Sekunden lang durchgeführt wurde. Das Schlagelement war analog Beispiel 1, wobei die große Masse des Schlagelementes eine Erwärmung über die Raumtemperatur verhinderte. Durch die periodische impulsartige Beanspruchung wies die Schweißnaht eine weitere Steigerung der Festigkeit auf über 95 % des Material-Basiswertes auf.

Beispiel 3: Ein geteilter Raum aus Polyäthylen mit einer Dicke von 1,5 mm, welcher einen verstärkten Rand aufwies, wurde in seinem inneren Bereich, der eine rechteckige Ausnehmung der Abmessungen 200 mm x 200 mm aufwies, mit einem Polypropylen, das mit Kohlenstoff gefüllt war, schrittweise verbunden. Sowohl durch die Verschweißung, als auch durch die impulsartige Beaufschlagung mit einem Schlagelement, das Raumtemperatur aufwies, war in den Eckenbereichen eine Überschneidung der Schweißnähte gegeben. Der so eingeschweißte innere Bereiche einer Elektrode war trotz der unterschiedlichen Wärmeleitfähigkeit, nachdem alle vier Stirnbereiche mit dem Rahmen verschweißt wurden, vollkommen plan, sodaß bei einer mit dieser Elektrode gefertigten Zink-Brom-Batterie besonders genau dimensioniert werden konnte, womit der innere Widerstand der Zink-Brom-Batterie besonders gering und ihre Kapazität auf sehr wirksame Weise hochgehalten werden konnte.

Es wurden weitere Versuche mit Polyäthylen aber auch mit Polyvinylchlorid mit Weichmachern, geschäumten Polypropylen Polyvinylacetat und anderen thermoplastischen Kunststoffen durchgeführt, wobei jeweils die Festigkeit der Schweißverbindung wesentlich erhöht werden konnte und gleichzeitig ein Verwerfen der miteinander verbundenen Teile wirksam vermieden werden konnte.

## Patentansprüche

1. Verfahren zum Verbinden von thermoplastischen Kunststoffteilen, wobei deren zu verbindende thermoplastische Stirnbereiche, insbesondere durch Kontakt mit einem Heizelement, z. B. metallisches Schwert, insbesondere gleichzeitig, bis zum Erweichen erhitzt werden, worauf die erweichten Kunststoffbereiche zum gegenseitigen Kontakt gebracht werden, insbesondere die Kunststoffteile zueinander geschoben werden, wodurch eine Schweißnaht zwischen den Kunststoffteilen gebildet wird, welche mechanisch mit Druck beaufschlagt wird, dadurch gekennzeichnet, daß die noch erweichte und vorzugsweise abkühlende Schweißnaht und gegebenenfalls die anschließenden Ränder der Kunststoffteile, mit einem auf Raumtemperatur gehaltenen Schlagelement impulsartig, insbesondere durch zumindest einen Impuls, beaufschlagt wird.

2. Verfahren nach Anspruch 1, dadurch gekennzeichnet, daß die Impulsbeaufschlagung bezogen auf die Schweißnaht schrittweise erfolgt und die jeweils frisch gebildete Schweißnaht beaufschlagt wird.

3. Verfahren nach Anspruch 1 oder 2, dadurch gekennzeichnet, daß die Schweißnaht der zu verbindenden Teile mit Bereichen unterschiedlicher Wärmeleitfähigkeit durch Aufschmelzen von Kunststoffteilen mit unterschiedlicher Wärmeleitfähigkeit, z. B. Kunststoffteile mit unterschiedlichem Füllstoffgehalt bzw. Füllstoffen, gebildet wird.

4. Verfahren nach einem der Ansprüche 1 bis 3, dadurch gekennzeichnet, daß an aneinander, insbesondere unter einem Winkel > 0°, z. B. 90°, anschließenden Schweißnähten die impulsartige Beaufschlagung eine Schweißnaht übergreift.

5. Verfahren nach einem der Ansprüche 1 bis 4, dadurch gekennzeichnet, daß die Schweißnaht von beiden Seiten, insbesondere gleichzeitig, impulsartig beaufschlagt wird.

6. Verfahren nach einem der Ansprüche 1 bis 5, dadurch gekennzeichnet, daß die Schweißnaht etwa in der Materialstärke der zu verbindenden Kunststoffteile im Bereich der Verbindung gehalten wird.

## Claims

1. A process for assembling thermoplastic material parts, wherein thermoplastic front areas of said parts are heated, especially simultaneously, up to the softening point, especially through contact with an heating element, for example a metal blade, the softened plastic material areas then being brought into mutual contact, said plastic material parts being especially pushed one towards the other, thus forming, between said plastic material parts, a soldered joint which is mechanically submitted to a pressure, characterized in that said still softened soldered joint, and preferably during the cooling thereof, as well as, if so desired, adjacent edges of said plastic material parts, are pulse biaised, especially by at least one pulse, by means of an impact member which is maintained at ambient temperature.

2. The process of claim 1, characterized in that said pulse biaising is stepwise carried out, with reference to said soldered joint, with the biaising action being always performed on said soldered joint newly formed.

3. The process of claim 1 or claim 2, characterized in that said soldered joint for the parts to be assembled, including areas with different thermal conductivity, is obtained by fusing plastic material parts showing different thermal conductivity, for example plastic material parts having different filling material contents or different filling materials.

4. The process of any claim 1-3, characterized in that, should said soldered joints unite, especially forming therebetween an angle higher than 0°, for example equal to 90°, said pulse biaising overshoots by a soldered joint.

5. The process of any claim 1-4, characterized in that said soldered joint is pulse biaised from both sides, especially simultaneously from both sides.

6. The process of any claim 1-5, characterized in that said soldered joint is substantially limited to the material thickness of the plastic material parts to be assembled in the assembly area thereof.

## Revendications

1. Procédé destiné à assembler des pièces de matière plastique thermoplastique, selon lequel les zones frontales thermoplastiques de ces pièces sont chauffées, notamment simultanément, jusqu'au ramollissement, notamment par contact avec un élément chauffant, par exemple une lame métallique, les zones de matière plastique ramollies étant ensuite amenées en contact réciproque, les pièces de matière plastique étant notamment poussées l'une vers l'autre, en entraînant ainsi la formation, entre les pièces de matière plastique, d'un joint soudé qui est sollicité mécaniquement par une pression, caractérisé en ce que le joint soudé encore ramolli et de préférence en cours de refroidissement, ainsi que, le cas échéant, les bords attenants des pièces de matière plastique, sont sollicités par impulsions, notamment par au moins une impulsion, à l'aide d'un élément de frappe maintenu à température ambiante.

2. Procédé selon la revendication 1, caractérisé en ce que la sollicitation par impulsions s'effectue pas à pas, en se référant au joint soudé, la sollicitation s'effectuant toujours sur le joint soudé nouvellement formé.

3. Procédé selon la revendication 1 ou 2, caractérisé en ce que le joint soudé des pièces à assembler, comportant des zones de conductibilité thermique différente, est formé par fusion de pièces de matière plastique de conductibilité thermique différente, par exemple des pièces de matière plastique à teneurs de matériaux de charge différentes ou à matériaux de charge différents.

4. Procédé selon l'une des revendications 1 à 3, caractérisé en ce que pour des joints soudés se raccordant, notamment en formant entre-eux un angle > 0°, par exemple 90°, la sollicitation par impulsions déborde d'un joint soudé.

5. Procédé selon l'une des revendications 1 à 4, caractérisé en ce que le joint soudé est sollicité par impulsions à partir des deux côtés, notamment simultanément à partir des deux côtés.

6. Procédé selon l'une des revendications 1 à 5, caractérisé en ce que le joint soudé est limité sensiblement à l'épaisseur de matériau des pièces de matière plastique à assembler dans la zone de l'assemblage.
